# EUROPEAN PATENT APPLICATION

(11) **EP 4 570 832 A1**
(43) Date of publication of application: **18.06.2025**
(21) Application number: 23852637.0
(22) Date of filing: 10.08.2023
(51) Int. Cl.: C08F 214/26, B29C 55/02, C08J 5/18, C08J 9/00, C08J 9/28

(54) **MODIFIED POLYTETRAFLUOROETHYLENE AND STRETCHED BODY**

(30) Priority: 10.08.2022 JP 2022128223
(71) Applicant: DAIKIN INDUSTRIES, LTD., Osaka-shi, Osaka 530-0001 (JP)
(72) Inventor: YASUDA, Kohei, Osaka-Shi, Osaka 530-0001 (JP); NANBA, Yoshinori, Osaka-Shi, Osaka 530-0001 (JP); ICHIKAWA, Kenji, Osaka-Shi, Osaka 530-0001 (JP); KATO, Taketo, Osaka-Shi, Osaka 530-0001 (JP); YAMANAKA, Taku, Osaka-Shi, Osaka 530-0001 (JP); NISHIMURA, Kenta, Osaka-Shi, Osaka 530-0001 (JP); USAMI, Ryota, Osaka-Shi, Osaka 530-0001 (JP); YAMAMOTO, Emi, Osaka-Shi, Osaka 530-0001 (JP); SATO, Hiroyuki, Osaka-Shi, Osaka 530-0001 (JP)
(74) Representative: Hoffmann Eitle
(86) International application number: PCT/JP2023/029332
(87) International publication number: WO 2024/034675

(57) **Abstract**

The disclosure provides a modified polytetrafluoroethylene having a low extrusion pressure despite having a high tensile strength at break, and an expanded article including the same. Provided is a modified polytetrafluoroethylene including: a tetrafluoroethylene unit; and a hexafluoropropylene unit, the hexafluoropropylene unit being contained in an amount of 1.0% by mass or less in all polymerized units, the modified polytetrafluoroethylene having a tensile strength at break of 20.0 N or higher and a thermal instability index of lower than 40.

## Description

### TECHNICAL FIELD

The disclosure relates to modified polytetrafluoroethylenes and expanded articles.

### BACKGROUND ART

When polytetrafluoroethylene is molded and highly expanded in a non-sintered state, a porous polytetrafluoroethylene film can be obtained. This porous film allows water vapor and other gases to pass through but does not allow water droplets to pass through due to the strong water repellency of polytetrafluoroethylene. Utilizing this unique property, polytetrafluoroethylene is applied to clothing and separation membranes, for example.

Patent Literature 1 discloses a polytetrafluoroethylene fine powder including a unit based on a comonomer such as CH₂=CH-(CF₂)₄F.

Patent Literature 2 discloses a modified polytetrafluoroethylene fine powder including a unit based on perfluoro(methyl vinyl ether).

Patent Literature 3 discloses a powder of polytetrafluoroethylene including a tetrafluoroethylene homopolymer or a unit based on hexafluoropropylene.

### CITATION LIST

### - Patent Literature

Patent Literature 1: WO 2011/055824
Patent Literature 2: JP 2015-127411 A
Patent Literature 3: WO 2020/022355

### SUMMARY OF INVENTION

### - Technical Problem

The disclosure aims to provide a modified polytetrafluoroethylene having a low extrusion pressure despite having a high tensile strength at break, and an expanded article including the same.

### - Solution to Problem

The disclosure (1) relates to a modified polytetrafluoroethylene including: a tetrafluoroethylene unit; and a hexafluoropropylene unit, the hexafluoropropylene unit being contained in an amount of 1.0% by mass or less in all polymerized units, the modified polytetrafluoroethylene having a tensile strength at break of 20.0 N or higher and a thermal instability index of lower than 40.

The disclosure (2) relates to the modified polytetrafluoroethylene according to the disclosure (1), wherein the modified polytetrafluoroethylene has a strength ratio represented by "tensile strength at break (N)/extrusion pressure (MPa)" of 1.80 N/MPa or higher.

The disclosure (3) relates to the modified polytetrafluoroethylene according to the disclosure (1) or (2), wherein the modified polytetrafluoroethylene has a stress-relaxation time of 500 seconds or longer.

The disclosure (4) relates to the modified polytetrafluoroethylene according to any one of the disclosures (1) to (3), wherein the modified polytetrafluoroethylene has an extrusion pressure of lower than 17.0 MPa.

The disclosure (5) relates to the modified polytetrafluoroethylene according to any one of the disclosures (1) to (4), wherein the modified polytetrafluoroethylene has an extrusion pressure of lower than 16.0 MPa.

The disclosure (6) relates to a modified polytetrafluoroethylene including: a tetrafluoroethylene unit; and a hexafluoropropylene unit, the hexafluoropropylene unit being contained in an amount of less than 0.1% by mass in all polymerized units.

The disclosure (7) relates to the modified polytetrafluoroethylene according to any one of the disclosures (1) to (6), wherein the modified polytetrafluoroethylene is in the form of powder.

The disclosure (8) relates to the modified polytetrafluoroethylene according to any one of the disclosures (1) to (7), wherein the modified polytetrafluoroethylene is in the form of fine powder.

The disclosure (9) relates to an expanded article including the modified polytetrafluoroethylene according to any one of the disclosures (1) to (8).

### - Advantageous Effects of Invention

The disclosure can provide a modified polytetrafluoroethylene having a low extrusion pressure despite having a high tensile strength at break, and an expanded article including the same.

### DESCRIPTION OF EMBODIMENTS

In general, polytetrafluoroethylene (PTFE) has a higher tensile strength at break at a higher extrusion pressure. However, the resulting paste extrudate tends to be harder, decreasing the moldability of the extrudate.

As a result of intensive studies, contrary to the technical common knowledge, PTFE having a high tensile strength at break despite having a low extrusion pressure is found to be obtainable, as a modified PTFE prepared using hexafluoropropylene as a modifying monomer, by adjusting the composition ratio of tetrafluoroethylene and hexafluoropropylene during the polymerization within a specific range.

The disclosure will be specifically described hereinbelow.

The disclosure provides a modified PTFE (hereafter, also referred to as a first modified PTFE) including: a tetrafluoroethylene (TFE) unit; and a hexafluoropropylene (HFP) unit, the HFP unit being contained in an amount of 1.0% by mass or less in all polymerized units, the modified PTFE having a tensile strength at break of 20.0 N or higher and a thermal instability index of lower than 40.

The first modified PTFE, having the above configuration, has a low extrusion pressure and excellent moldability despite having a high tensile strength at break. The reason why the first modified PTFE has such physical properties is not clear. Still, the presence of HFP in the reaction system even at the final stage of the polymerization, due to the low reactivity of HFP with TFE, presumably affects the physical properties of the resulting modified PTFE.

The first modified PTFE is also excellent in heat resistance.

The first modified PTFE includes a TFE unit (polymerized unit based on TFE) and a HFP unit (polymerized unit based on HFP), and the amount of the HFP unit is 1.0% by mass or less in all polymerized units.

The amount of the TFE unit in the modified PTFE may be 99.0% by mass or more.

The modified PTFE may further include a polymerized unit based on a modifying monomer other than TFE and HFP (different modifying monomer unit).

The different modifying monomer may be any monomer copolymerizable with TFE. Examples thereof include: a hydrogen-containing fluoroolefin such as trifluoroethylene and vinylidene fluoride (VDF); a perhaloolefin such as chlorotrifluoroethylene; a perfluoroolefin; a perfluorovinyl ether; a perfluoroallyl ether; a (perfluoroalkyl)ethylene; and ethylene. One different modifying monomer may be used alone, or two or more different modifying monomers may be used in combination.

The amount of the different modifying monomer unit is preferably less than 1.0% by mass, more preferably 0.1% by mass or less, in all polymerized units.

The total amount of the HFP unit and the different modifying monomer unit is preferably 1.0% by mass or less in all polymerized units.

The amount of the HFP unit in all polymerized units is 1.0% by mass or less. In order to further lower the extrusion pressure and further increase the tensile strength at break, the amount is preferably 0.50% by mass or less, more preferably 0.30% by mass or less, still more preferably 0.10% by mass or less, further preferably 0.05% by mass or less, even more preferably 0.02% by mass or less, particularly preferably 0.01% by mass or less, in all polymerized units.

The amount of the HFP unit in all polymerized units may be 0.0001% by mass or more or may be 0.001% by mass or more.

The HFP unit herein means a moiety that is part of the molecular structure of the modified PTFE and is derived from HFP.

The amounts of the above polymerized units can be calculated by any appropriate combination of NMR, FT-IR, elemental analysis, and X-ray fluorescence analysis in accordance with the types of the monomers.

The first modified PTFE has a tensile strength at break of 20.0 N or higher. The tensile strength at break is preferably 25.0 N or higher, more preferably 28.0 N or higher, still more preferably 30.0 N or higher. The higher the tensile strength at break, the better. Still, the tensile strength at break may be 100.0 N or lower, 80.0 N or lower, or 50.0 N or lower.

The tensile strength at break is a value obtained by the following method.

An expanded beading (article produced by stretching a beading) obtained in the later-described expansion test performed at a stretching speed of 100%/sec is clamped between movable jaws with a gauge length of 5.0 cm to be fixed, and subjected to a tensile test at 25°C at a rate of 300 mm/min. The strength at break is measured as the tensile strength at break.

The first modified PTFE has a thermal instability index (TII) of lower than 40. In order to further lower the extrusion pressure, further increase the tensile strength at break, and further improve the heat resistance, the thermal instability index is preferably 15 or lower, more preferably 10 or lower, particularly preferably lower than 5.

The thermal instability index is preferably -10 or higher, more preferably 0 or higher.

The thermal instability index is determined in conformity with ASTM D4895.

The extrusion pressure of the first modified PTFE is preferably 20.0 MPa or lower, more preferably lower than 18.0 MPa, still more preferably lower than 17.0 MPa, further preferably lower than 16.0 MPa. The extrusion pressure may be 5.0 MPa or higher or may be 10.0 MPa or higher.

The extrusion pressure is a value obtained by the following method.

To 100 g of a modified PTFE powder is added 21.7 g of lubricant (trade name: Isopar H (registered trademark), ExxonMobil Corp.), followed by mixing at room temperature for three minutes, whereby a PTFE fine powder mixture is obtained. Next, the resulting PTFE fine powder mixture is left to stand for at least one hour at room temperature (25°C) before extrusion, and paste-extruded through an orifice (diameter: 2.5 mm, land length: 11 mm, introduction angle: 30°) at room temperature at a reduction ratio (a ratio of the die inlet cross-sectional area to the die outlet cross-sectional area) of 100:1, whereby uniform beadings (extrudates) are obtained. The extrusion speed, i.e., the ram speed is set to 20 inches/min (51 cm/min). The load at which the pressure is in equilibrium in the paste extrusion is measured, and the obtained value is divided by the cylinder cross-sectional area used in the paste extrusion. The resulting value is defined as the extrusion pressure (MPa).

The first modified PTFE has a strength ratio represented by "tensile strength at break (N)/extrusion pressure (MPa)" of preferably 1.80 N/MPa or higher, more preferably 1.85 N/MPa or higher, still more preferably 1.90 N/MPa or higher, further preferably 1.95 N/MPa or higher, further preferably 2.00 N/MPa or higher. The higher the strength ratio, the better. Still, the strength ratio may be 5.00 N/MPa or lower, 4.00 N/MPa or lower, or 3.00 N/MPa or lower.

The higher the strength ratio, the higher the tensile strength at break and the lower the extrusion pressure.

The tensile strength at break and the extrusion pressure are each a value obtained by the above corresponding method.

The first modified PTFE is preferably expandable. Whether or not being "expandable" herein is determined based on the following standard.

A beading obtained by the paste extrusion is heated at 230°C for 30 minutes, whereby the lubricant is removed from the beading. The beading (extrudate) is cut to an appropriate length and the resulting sample is clamped at each end with a gap between the clamps of 2.0 inches (51 mm), followed by heating to 300°C in an air-circulating furnace. The clamps are then moved apart at a desired speed (stretching speed) until the separation distance corresponds to the desired degree of stretching (total degree of stretching). The stretching test is performed in this manner. The stretching method is essentially in conformity with the method disclosed in US 4576869 B, except that the extrusion speed is different (51 cm/min, not 84 cm/min). The "degree of stretching" shows the increase in length attributable to expansion, and is typically expressed in relation to the original length. In the above production method, the stretching speed is 1000%/sec and the total degree of stretching is 2400%. When no breakage occurs by the completion of the stretching, the beading is considered expandable.

In the production method, the modified PTFE of the disclosure preferably does not break by the completion of the stretching in the stretching test performed under the conditions of the stretching speed of 100%/sec and the total degree of stretching of 2400%.

In order to further improve the heat resistance, the first modified PTFE preferably has a stress-relaxation time of 500 seconds or longer, more preferably 550 seconds or longer, still more preferably 600 seconds or longer, particularly preferably 650 seconds or longer.

The longer the stress-relaxation time, the better. Still, the stress-relaxation time may be 2000 seconds or shorter or 1000 seconds or shorter.

The stress-relaxation time is a value obtained by the following method.

An expanded beading is obtained as in the above expansion evaluation test performed at a stretching speed of 1000%/sec, except that the gap between clamps is set to 1.5 inches (38 mm). The expanded beading is clamped at its ends by a fixture to give a taut beading sample with a total length of 8 inches (20 cm). The temperature of an oven is maintained at 390°C, and the fixture is inserted into the oven through a (covered) slit on a side of the oven. The time required from the insertion of the fixture into the oven to breakage of the beading sample is measured as the stress-relaxation time.

In order to achieve excellent expandability, the standard specific gravity (SSG) of the first modified PTFE is preferably 2.200 or less, more preferably 2.180 or less, still more preferably 2.170 or less, further preferably 2.160 or less, even more preferably 2.155 or less, particularly preferably 2.150 or less.

The standard specific gravity is also preferably 2.130 or more.

The standard specific gravity is measured by the water displacement method in conformity with ASTM D792 using a sample molded in conformity with ASTM D4895.

The first modified PTFE commonly has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

The first modified PTFE may have a core-shell structure. An example of the PTFE having a core-shell structure is a modified PTFE including a core of high-molecular-weight PTFE and a shell of lower-molecular-weight PTFE or modified PTFE in a particle. Examples of this modified PTFE include PTFEs disclosed in JP S64-8022 B.

The first modified PTFE can be produced by, for example, a production method including a step of emulsion-polymerizing TFE and HFP (and a different modifying monomer, if needed).

The emulsion polymerization can be performed, for example, in an aqueous medium in the presence of a fluorine-containing anionic surfactant and a polymerization initiator.

The emulsion polymerization may be performed by, for example, charging a polymerization reactor with an aqueous medium, the fluorine-containing anionic surfactant, a monomer, and optionally other additives, stirring the contents in the reactor, maintaining the reactor at a predetermined polymerization temperature, and then adding a predetermined amount of a polymerization initiator to start the polymerization reaction. After the polymerization reaction starts, the monomer, the polymerization initiator, a chain transfer agent, the surfactant, and the like may be added in accordance with the purposes. The surfactant may be added after the polymerization reaction starts.

The polymerization initiator may be any initiator capable of generating radicals within the polymerization temperature range, and any known oil-soluble and/or water-soluble polymerization initiator may be used. Further, the initiator may be combined with a reducing agent, for example, into the form of a redox agent to start polymerization. The concentration of the polymerization initiator is appropriately determined in accordance with the type of the monomer, the molecular weight of the target modified PTFE, and the reaction rate.

The polymerization initiator used may be an oil-soluble radical polymerization initiator or a water-soluble radical polymerization initiator.

The oil-soluble radical polymerization initiator may be a known oil-soluble peroxide. Typical examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, dialkyl peroxides such as di-t-butyl peroxide, as well as di(perfluoroacyl) or di(fluorochloroacyl) peroxides such as di(ω-hydro-dodecafluoroheptanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The water-soluble radical polymerization initiator may be a known water-soluble peroxide. Examples thereof include ammonium salts, potassium salts, and sodium salts of any of persulfuric acid, perboric acid, perchloric acid, perphosphoric acid, and percarbonic acid, t-butyl permaleate, and t-butyl hydroperoxide. The initiator may also contain a reducing agent such as a sulfite or a sulfurous acid salt. The amount thereof used may be 0.1 to 20 times the amount of the peroxide.

The water-soluble radical polymerization initiator may be added in any amount. For example, it may be added in an amount that does not significantly decrease the polymerization rate (e.g., concentration of several parts per million relative to water) or more at one time in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces.

In order to easily achieve the physical properties described above, in particular the excellent expansion property, the amount of the polymerization initiator added is preferably an amount equivalent to 0.1 ppm or more, more preferably an amount equivalent to 1.0 ppm or more, while preferably an amount equivalent to 100 ppm or less, more preferably an amount equivalent to 10 ppm or less in the aqueous medium.

For example, in the case of the polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, a bisulfite, a bromate, a diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of the copper salt is copper(II) sulfate and an example of the iron salt is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continuously or intermittently added thereto to start polymerization. For example, in the case of using potassium permanganate/ammonium oxalate, preferably, a polymerization vessel is charged with ammonium oxalate and potassium permanganate is continuously added thereto.

In the redox initiator herein, "potassium permanganate/ammonium oxalate" refers to a combination of potassium permanganate and ammonium oxalate. The same applies to other compounds.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium(IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably ammonium oxalate.

Specifically, the redox initiator preferably includes at least one selected from the group consisting of potassium permanganate/oxalic acid, potassium permanganate/ammonium oxalate, potassium bromate/ammonium sulfite, manganese triacetate/ammonium oxalate, and ammonium cerium nitrate/ammonium oxalate, more preferably at least one selected from the group consisting of potassium permanganate/oxalic acid, potassium permanganate/ammonium oxalate, potassium bromate/ammonium sulfite, and ammonium cerium nitrate/ammonium oxalate, still more preferably potassium permanganate/oxalic acid.

When a redox initiator is used, the oxidizing agent and the reducing agent may be added all at once at the initial stage of polymerization, or the reducing agent may be added all at once at the initial stage of polymerization and the oxidizing agent may be added continuously. Alternatively, the oxidizing agent may be added all at once at the initial stage of polymerization and the reducing agent may be added continuously, or both the oxidizing agent and the reducing agent may be added continuously.

When one agent of the redox polymerization initiator is added in an early stage of polymerization and the other agent is added continuously, it is preferable to gradually slow down the addition speed in order to obtain PTFE with a low SSG. Moreover, addition is preferably stopped in the middle of polymerization. The addition is preferably stopped before 20% to 40% by mass of the total TFE to be consumed in the polymerization reaction is consumed.

In use of a redox initiator as a polymerization initiator, the amount of the oxidizing agent added is preferably 0.1 ppm or more, more preferably 1.0 ppm or more, still more preferably 5 ppm or more, further preferably 10 ppm or more, while preferably 10000 ppm or less, more preferably 1000 ppm or less in the aqueous medium. The amount of the reducing agent added is preferably 0.1 ppm or more, more preferably 1.0 ppm or more, still more preferably 5 ppm or more, further preferably 10 ppm or more, while preferably 10000 ppm or less, more preferably 1000 ppm or less in the aqueous medium.

In use of a redox initiator in the emulsion polymerization, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

In order to easily achieve various properties described above, preferred examples of the polymerization initiator include a water-soluble radical polymerization initiator and a redox initiator.

The aqueous medium is a reaction medium in which polymerization is allowed to occur, and means a liquid that contains water. The aqueous medium may be any one containing water, and may be one containing water as well as, for example, a fluorine-free organic solvent such as alcohol, ether, and ketone and/or a fluorine-containing organic solvent having a boiling point of 40°C or lower.

In the emulsion polymerization, additives such as a nucleating agent, a chain transfer agent, a buffer, a pH adjuster, a stabilizing aid, a dispersion stabilizer, a radical scavenger, or a decomposer of a polymerization initiator may be used as needed.

In order to easily achieve various physical properties described above, a nucleating agent is preferably added in the emulsion polymerization. The nucleating agent is preferably added before starting the polymerization reaction.

The nucleating agent may be a known one. The nucleating agent preferably includes at least one selected from the group consisting of fluoropolyethers, nonionic surfactants, and chain transfer agents, more preferably a nonionic surfactant.

The fluoropolyether may be, for example, perfluoropolyether (PFPE) acid or its salt. The perfluoropolyether (PFPE) acid or its salt may have any chain structure in which oxygen atoms in the main chain of the molecule are separated by saturated fluorocarbon groups containing 1 to 3 carbon atoms. Also, two or more types of fluorocarbon groups may be present in the molecule. A typical structure has a repeating unit represented by any of the following formulas:

(-CFCF₃-CF₂-O-)ₙ,

(-CF₂-CF₂-CF₂-O-)ₙ,

(-CF₂-CF₂-O-)ₙ-(-CF₂-O-)ₘ,

and

(-CF₂-CFCF₃-O-)ₙ-(-CF₂-O-)ₘ.

These structures are disclosed by Kasai in J. Appl. Polymer Sci. 57, 797 (1995). As disclosed in this literature, the PFPE acid or its salt may have a carboxylic acid group or its salt at one end or at each end. The PFPE acid or its salt may also have a sulfonic acid or phosphonic acid group or its salt at one end or at each end. Moreover, the PFPE acid or its salt may have a different group at each end. In the case of monofunctional PFPE, the other end of the molecule is usually perfluorinated but may have a hydrogen or chlorine atom. The PFPE acid or its salt contains at least two ether oxygens, preferably at least four ether oxygens, still more preferably at least six ether oxygens. Preferably, at least one of the fluorocarbon groups separating the ether oxygens, more preferably at least two of such fluorocarbon groups contain two or three carbon atoms. Further preferably, at least 50% of the fluorocarbon groups separating the ether oxygens contain two or three carbon atoms. Preferably, the PFPE acid or its salt contains a total of at least 15 carbon atoms, and, for example, a preferred minimum value of n or n + m in the repeating unit structure is at least 5. Two or more PFPE acids or their salts having an acid group at one end or at each end may be used in the production method of the disclosure. The PFPE acid or its salt preferably has a number average molecular weight of less than 6000 g/mol.

In order to further increase the molecular weight of the modified PTFE and improve the expandability, a radical scavenger or a decomposer of a polymerization initiator is preferably added in the emulsion polymerization. The radical scavenger or the decomposer of a polymerization initiator is added after the start of the polymerization reaction, preferably before 10% by mass or more, preferably 20% by mass or more of the total TFE to be consumed in the polymerization reaction is polymerized, while preferably before 50% by mass or less, preferably 40% by mass or less of the total TFE to be consumed in the polymerization reaction is polymerized. The radical scavenger or the decomposer of a polymerization initiator is preferably added after later-described depressurization and repressurization, if performed.

The radical scavenger used is a compound that has no reinitiation ability after addition or chain transfer to free radicals in the polymerization system. Specifically, used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or greater, still more preferably 1.0 or greater, further preferably 5.0 or greater, particularly preferably 10 or greater.

The radical scavenger preferably includes, for example, at least one selected from the group consisting of aromatic hydroxy compounds, aromatic amines, N,N-diethylhydroxylamine, quinone compounds, terpenes, thiocyanates, and cupric chloride (CuCl₂).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphthoresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate (NH₄SCN), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to reduce the standard specific gravity, the amount of the radical scavenger added is preferably an amount equivalent to 3% to 500% (on a molar basis) of the polymerization initiator concentration. The lower limit is more preferably 10% (on a molar basis), still more preferably 15% (on a molar basis). The upper limit is more preferably 400% (on a molar basis), still more preferably 300% (on a molar basis).

The decomposer of a polymerization initiator may be any compound that can decompose the polymerization initiator used, and preferably includes, for example, at least one selected from the group consisting of sulfites, bisulfites, bromates, diimines, diimine salts, oxalic acid, oxalates, copper salts, and iron salts. Examples of sulfites include sodium sulfite and ammonium sulfite. An example of the copper salt is copper(II) sulfate and an example of the iron salt is iron(II) sulfate.

In order to reduce the standard specific gravity, the amount of the decomposer added is preferably an amount equivalent to 3% to 500% (on a molar basis) of the initiator concentration. The lower limit is more preferably 10% (on a molar basis), still more preferably 15% (on a molar basis). The upper limit is more preferably 400% (on a molar basis), still more preferably 300% (on a molar basis).

In the emulsion polymerization, the polymerization temperature and the polymerization pressure are appropriately determined in accordance with the type of the monomer used, the molecular weight of the target modified PTFE, and the reaction rate. The polymerization temperature is typically 5°C to 150°C. The polymerization temperature is preferably 10°C or higher, more preferably 30°C or higher, still more preferably 50°C or higher. The polymerization temperature is more preferably 120°C or lower, still more preferably 100°C or lower.

The polymerization pressure is normally 0.05 to 10 MPaG. In order to further increase the tensile strength at break, the polymerization pressure is more preferably 0.3 MPaG or higher, still more preferably 0.5 MPaG or higher, while more preferably 5.0 MPaG or lower, still more preferably 3.0 MPaG or lower.

In the emulsion polymerization, in order to easily achieve various physical properties described above, the HFP concentration in the gas in the reactor at the time of starting polymerization (when adding an initiator) is preferably set to 0.01 to 3.0 mol%. Further, the HFP concentration in the gas in the reactor at the time when 40% by mass of the total TFE to be consumed in the polymerization reaction is polymerized is preferably higher than 0 mol% and 0.2 mol% or lower. The HFP concentration is preferably maintained thereafter until the end of the polymerization reaction. HFP may be fed all at once before the start of polymerization, or a portion thereof may be fed before the start of polymerization and the rest may be added continuously or intermittently after the start of polymerization. By allowing HFP to remain until the end of the polymerization reaction, the extrusion pressure is lowered even though the modified PTFE to be obtained has a higher tensile strength at break.

In the emulsion polymerization, in order to achieve further improved tensile strength at break, preferably, depressurization is performed before 5% to 40% by mass of the total TFE to be consumed in the polymerization reaction is polymerized, followed by repressurization with TFE alone.

The depressurization is preferably performed such that the pressure inside the reactor is 0.2 MPaG or lower, more preferably 0.1 MPaG or lower, still more preferably 0.05 MPaG or lower. The depressurization is preferably performed such that the pressure inside the reactor is 0.0 MPaG or higher.

The depressurization and the repressurization may be performed multiple times. The depressurization may be performed to a reduced pressure using a vacuum pump.

The production method may include a step of coagulating the aqueous dispersion to obtain a wet powder of the modified PTFE. The coagulation can be performed by a known method.

The production method may include a step of drying the wet powder. The drying is typically performed by means such as vacuum, high frequency, or hot air, while the wet powder is kept in a state where it does not flow so much, preferably in a stationary state. Friction between powders, especially at high temperatures, generally has an unfavorable effect on fine powder PTFE. This is because particles made of PTFE of this type are easily fibrillated even by a small shearing force to lose their original stable particle structure.

In order to lower the extrusion pressure, the drying temperature is preferably 300°C or lower, more preferably 250°C or lower, still more preferably 230°C or lower, further preferably 210°C or lower, further preferably 190°C or lower, particularly preferably 170°C or lower. In order to achieve an improved tensile strength at break, the drying temperature is preferably 10°C or higher, more preferably 100°C or higher, still more preferably 150°C or higher, further preferably 170°C or higher, further preferably 190°C or higher, particularly preferably 210°C or higher. In order to further increase the strength ratio, the drying temperature is preferably appropriately adjusted within this temperature range.

The disclosure also provides a modified PTFE including: a TFE unit; and a HFP unit, the HFP unit being contained in an amount of less than 0.1% by mass in all polymerized units (hereafter, also referred to as a second modified PTFE).

The amount of the HFP unit in the second modified PTFE is less than 0.1% by mass, preferably 0.05% by mass or less, more preferably 0.02% by mass or less, still more preferably 0.01% by mass or less, in all polymerized units.

The amount of the HFP unit in all polymerized units may be 0.0001% by mass or more or may be 0.001% by mass or more.

The amount of the TFE unit in the second modified PTFE may be 99.0% by mass or more.

The second modified PTFE may further include a polymerized unit based on a modifying monomer other than TFE and HFP (different modifying monomer unit).

The different modifying monomer may be any monomer copolymerizable with TFE. Examples thereof include: a hydrogen-containing fluoroolefin such as trifluoroethylene and vinylidene fluoride (VDF); a perhaloolefin such as chlorotrifluoroethylene; a perfluoroolefin; a perfluorovinyl ether; a perfluoroallyl ether; a (perfluoroalkyl)ethylene; and ethylene.

The amount of the different modifying monomer unit is preferably less than 0.1% by mass in all polymerized units.

The total amount of the HFP unit and the different modifying monomer unit is preferably less than 0.1% by mass in all polymerized units.

The second modified PTFE preferably has a tensile strength at break of 20.0 N or higher, more preferably 25.0 N or higher, still more preferably 28.0 N or higher, further preferably 30.0 N or higher. The higher the tensile strength at break, the better. Still, the tensile strength at break may be 100.0 N or lower, 80.0 N or lower, or 50.0 N or lower.

The second modified PTFE has a thermal instability index (TII) of preferably lower than 40, more preferably 15 or lower, still more preferably 10 or lower, particularly preferably lower than 5.

The thermal instability index is preferably -10 or higher, more preferably 0 or higher.

The extrusion pressure of the second modified PTFE is preferably 20.0 MPa or lower, more preferably lower than 18.0 MPa, still more preferably lower than 17.0 MPa, further preferably lower than 16.0 MPa. The extrusion pressure may be 5.0 MPa or higher or may be 10.0 MPa or higher.

The second modified PTFE has a strength ratio represented by "tensile strength at break (N)/extrusion pressure (MPa)" of preferably 1.80 N/MPa or higher, more preferably 1.85 N/MPa or higher, still more preferably 1.90 N/MPa or higher, further preferably 1.95 N/MPa or higher, further preferably 2.00 N/MPa or higher. The higher the strength ratio, the better. Still, the strength ratio may be 5.00 N/MPa or lower, 4.00 N/MPa or lower, or 3.00 N/MPa or lower.

The second modified PTFE is preferably expandable.

The second modified PTFE preferably has a stress-relaxation time of 450 seconds or longer, more preferably 500 seconds or longer, still more preferably 550 seconds or longer, particularly preferably 600 seconds or longer.

The longer the stress-relaxation time, the better. Still, the stress-relaxation time may be 2000 seconds or shorter or 1000 seconds or shorter.

The standard specific gravity (SSG) of the second modified PTFE is preferably 2.200 or less, more preferably 2.180 or less, still more preferably 2.170 or less, further preferably 2.160 or less, even more preferably 2.155 or less, particularly preferably 2.150 or less.

The standard specific gravity is also preferably 2.130 or more.

The second modified PTFE may have the same physical properties as the first modified PTFE.

The second modified PTFE can be suitably produced by the production method that has been described for the first modified PTFE.

The first and second modified PTFEs are preferably in the form of powder, more preferably in the form of fine powder.

The first and second modified PTFEs can also be provided in the form of aqueous dispersions. An aqueous dispersion containing particles of either the first or second modified PTFE is also a preferred embodiment of the disclosure.

The first and second modified PTFEs have an average primary particle size of preferably 500 nm or smaller, more preferably 350 nm or smaller, still more preferably 300 nm or smaller, particularly preferably 280 nm or smaller, while preferably 100 nm or greater, more preferably 150 nm or greater, still more preferably 170 nm or greater, particularly preferably 200 nm or greater.

The average primary particle size is measured by the following method.

A modified PTFE aqueous dispersion is diluted with water to a solid content concentration of 0.15% by mass. The transmittance of 550-nm light relative to the unit length of the resulting diluted latex is measured. The Feret diameters in a transmission electron microscopic image are measured and the number-based length average particle size is determined therefrom. A calibration curve is obtained from these values. Using this calibration curve, the number average particle size is determined from the measured transmittance of 550-nm light incident on each sample, and defined as the average primary particle size.

The first and second modified PTFEs may have an average aspect ratio of 2.0 or lower, preferably 1.8 or lower, more preferably 1.7 or lower, still more preferably 1.6 or lower, further preferably 1.5 or lower, further preferably 1.4 or lower, even more preferably 1.3 or lower, particularly preferably 1.2 or lower, most preferably 1.1 or lower. The average aspect ratio may be 1.0 or higher.

The average aspect ratio is determined as follows. Specifically, a fluororesin powder or an aqueous dispersion of the fluororesin diluted to have a solid concentration of about 1% by mass is observed using a scanning electron microscope (SEM) and 200 or more particles randomly selected are imaged. The ratio of the major and minor axes of each particle is then obtained and the average thereof is defined as the average aspect ratio.

The first and second modified PTFEs have an average secondary particle size of 100 µm or greater, more preferably 200 µm or greater, still more preferably 300 µm or greater, while preferably 2000 µm or smaller, more preferably 1000 µm or smaller, still more preferably 800 µm or smaller, particularly preferably 700 µm or smaller.

The average secondary particle size is measured in conformity with JIS K 6891.

The first and second modified PTFEs are particularly useful as raw materials of expanded articles. The disclosure also provides an expanded article including either the first or second modified PTFE.

The expanded article of the disclosure can be obtained by expanding the first or second modified PTFE.

The expanded article is also preferably in the form of a film, a tube, fibers, or rods.

The expanded article in the form of a film (expanded film or porous film) can be formed by expansion by a known PTFE expansion method.

Preferably, a sheet-shaped or rod-shaped paste extrudate is roll-expanded in an extruding direction, whereby a uniaxially expanded film can be obtained.

Further expansion in a transverse direction using a tenter, for example, can provide a biaxially expanded film.

Prebaking treatment is also preferably performed before expansion.

The expanded article can be formed as a porous article having a high porosity, and can be suitably used as a filter material for a variety of microfiltration membranes such as air filters and chemical filters and a support member for polymer electrolyte membranes.

The expanded article is also useful as a material of products used in the textile field, the medical treatment field, the electrochemical field, the sealant field, the air filter field, the ventilation/internal pressure adjustment field, the liquid filter field, and the consumer goods field.

The following provides examples of specific applications.

### - Electrochemical field

Examples of the applications in this field include prepregs for dielectric materials, EMI-shielding materials, and heat conductive materials. More specifically, examples thereof include printed circuit boards, electromagnetic interference shielding materials, insulating heat conductive materials, and insulating materials.

### - Sealant field

Examples of the applications in this field include gaskets, packings, pump diaphrams, pump tubes, and sealants for aircraft.

### - Air filter field

Examples of the applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN filters (for industries), catalyst filters (for exhaust gas treatment), absorbent-attached filters (for HDD embedment), absorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

### - Ventilation/internal pressure adjustment field

Examples of the applications in this field include materials for freeze drying such as containers for freeze drying, ventilation materials for automobiles for electronic circuits and lamps, applications relating to containers such as container caps, protective ventilation for electronic devices, including small devices such as tablet terminals and mobile phone terminals, and ventilation for medical treatment.

### - Liquid filter field

Examples of the applications in this field include liquid filters for semiconductors (for production of semiconductors), hydrophilic PTFE filters (for production of semiconductors), filters for chemicals (for liquid chemical treatment), filters for pure water production lines (for production of pure water), and back-washing liquid filters (for treatment of industrial drainage).

### - Consumer goods field

Examples of the applications in this field include clothes, cable guides (movable wires for motor bikes), clothes for motor cyclists, cast liners (medical supporters), filters for cleaners, bagpipes (musical instrument), cables (signal cables for guitars), and strings (for string instrument).

### - Textile field

Examples of the applications in this field include PTFE fibers (fiber materials), machine threads (textiles), weaving yarns (textiles), and ropes.

### - Medical treatment field

Examples of the applications in this field include implants (extending articles), artificial blood vessels, catheters, general surgical operations (tissue reinforcing materials), products for head and neck (dura mater alternatives), oral health (tissue regenerative medicine), and orthopedics (bandages).

The first and second modified PTFEs are also suitably used for various additives such as dustproof additives, anti-dripping agents, and binders for batteries, coating applications, and applications of impregnation of glass cloth.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

The physical properties were determined by the following methods.

### <Amount of modifying monomer unit>

A PTFE powder was subjected to ¹⁹F-NMR measurement. The amount of the modifying monomer unit was calculated based on the obtained signals derived from functional groups using the following equation.

HFP content (% by mass) = (50A/(50A + 25B)) × 100 (A: Integral value of the CF₃ signal appearing at around - 65 ppm, B: Integral value of the CF₂ signal appearing at around -120 ppm)

The chemical shift value used was obtained with the peak top of the CF₂ signal derived from the polymer main chain at -120 ppm.

### Standard specific gravity (SSG)

The SSG was determined by the water displacement method in conformity with ASTM D792 using a sample molded in conformity with ASTM D4895.

### Average primary particle size

A modified PTFE aqueous dispersion was diluted with water to a solid content concentration of 0.15% by mass. The transmittance of 550-nm light relative to the unit length of the resulting diluted latex was measured. The Feret diameters in a transmission electron microscopic image were measured and the number-based length average particle size was determined therefrom. A calibration curve was obtained from these values. Using this calibration curve, the number average particle size was determined from the measured transmittance of 550-nm light incident on each sample, and defined as the average primary particle size.

### Average aspect ratio

The average aspect ratio was determined as follows. A fluororesin aqueous dispersion diluted to a solid content concentration of about 1% by mass was observed using a scanning electron microscope (SEM) and 200 or more randomly extracted particles were imaged. The average of the ratios of the major axes to the minor axes of the particles was determined as the average aspect ratio.

### Extrusion pressure

To 100 g of a modified PTFE powder was added 21.7 g of lubricant (trade name: Isopar H (registered trademark), ExxonMobil Corp.), followed by mixing at room temperature for three minutes, whereby a PTFE fine powder mixture was obtained. Next, the resulting PTFE fine powder mixture was left to stand for at least one hour at room temperature (25°C) before extrusion, and paste-extruded through an orifice (diameter: 2.5 mm, land length: 11 mm, introduction angle: 30°) at room temperature at a reduction ratio (a ratio of the die inlet cross-sectional area to the die outlet cross-sectional area) of 100:1, whereby uniform beadings (extrudates) were obtained. The extrusion speed, i.e., ram speed was set to 20 inches/min (51 cm/min). The load at which the pressure was in equilibrium in the paste extrusion was measured, and the obtained value was divided by the cylinder cross-sectional area used in the paste extrusion. The resulting value was defined as the extrusion pressure (MPa).

### Expansion test

A beading obtained by the above paste extrusion was heated at 230°C for 30 minutes, whereby the lubricant was removed from the beading. The beading (extrudate) was cut to an appropriate length and the resulting sample was clamped at each end with a gap between the clamps of 2.0 inches (51 mm), followed by heating to 300°C in an air-circulating furnace. The clamps were then moved apart at a desired speed (stretching speed) until the separation distance corresponded to the desired degree of stretching (total degree of stretching). The stretching test was performed in this manner. The stretching method is essentially in conformity with the method disclosed in US 4576869 B, except that the extrusion speed is different (51 cm/min, not 84 cm/min). The "degree of stretching" shows the increase in length attributable to expansion, and is typically expressed in relation to the original length. In the above production method, the stretching speed is 100%/sec and the total degree of stretching is 2400%.

### Tensile strength at break

An expanded beading (article produced by stretching a beading) obtained in the above expansion test was clamped between movable jaws with a gauge length of 5.0 cm to be fixed, and subjected to a tensile test at 25°C at a rate of 300 mm/min. The strength at break was measured as the tensile strength at break.

### Thermal instability index (TII)

The thermal instability index was measured in conformity with ASTM D4895.

### Stress-relaxation time

An expanded beading is obtained as in the above expansion test, except that the gap between clamps is set to 1.5 inches (38 mm) and the expansion speed is set to 1000%/sec. The expanded beading is clamped at its ends by a fixture to give a taut beading sample with a total length of 8 inches (20 cm). The temperature of an oven is maintained at 390°C, and the fixture is inserted into the oven through a (covered) slit on a side of the oven. The time required from the insertion of the fixture into the oven to breakage of the beading sample is measured as the stress-relaxation time.

### Synthesis Example 1

A white solid A was obtained by the method disclosed in Synthesis Example 1 of WO 2021/045228.

### Example 1

A 6-L stainless-steel autoclave equipped with a stainless-steel stirring blade and a temperature-controlling jacket was charged with 3580 g of deionized water, 100 g of paraffin wax, and 5.4 g of the white solid A. The inside of the autoclave was purged with nitrogen gas with warming to 70°C to remove oxygen. After 0.06 g of HFP was injected with TFE, TFE was injected to set the pressure inside the autoclave to 0.78 MPaG and the temperature inside the autoclave was maintained at 70°C under stirring. Next, an aqueous solution prepared by dissolving 15.4 mg of ammonium persulfate in 20 g of water was injected with TFE, whereby a polymerization reaction was started. The pressure inside the autoclave dropped as the polymerization reaction progressed. TFE was thus added so that the temperature inside the autoclave was maintained at 70°C and the pressure inside the autoclave was maintained at 0.78 MPaG.

When 430 g of TFE had been consumed from the start of the polymerization, an aqueous solution prepared by dissolving 18.0 mg of hydroquinone serving as a radical scavenger in 20 g of water was injected with TFE. The polymerization was further continued. When the amount of TFE polymerized reached 1540 g from the start of the polymerization, stirring and feeding of TFE were stopped. Immediately thereafter, the gas inside the autoclave was released to normal pressure and the polymerization reaction was terminated. The resulting aqueous dispersion was taken out and cooled, and the paraffin wax was separated, whereby a PTFE aqueous dispersion was obtained. The average aspect ratio was 1.40.

The PTFE aqueous dispersion obtained was diluted to a solid content concentration of 13% by mass. The PTFE was coagulated with stirring in the container, and water was filtered out, whereby a PTFE wet powder was obtained.

The obtained PTFE wet powder was dried in a hot-air circulating dryer at 180°C for 18 hours, whereby a modified PTFE fine powder was obtained.

The physical properties of the resulting modified PTFE fine powder were measured. The results are shown in Table 1.

### Example 2

A PTFE aqueous dispersion and a modified PTFE fine powder were obtained as in Example 1, except that the drying temperature was changed to 160°C.

The physical properties of the resulting modified PTFE fine powder were measured. The results are shown in Table 1.

### Example 3

A PTFE aqueous dispersion and a modified PTFE fine powder were obtained as in Example 1, except that the amount of HFP fed was changed to 0.11 g. The average aspect ratio was 1.38.

The physical properties of the resulting modified PTFE fine powder were measured. The result is shown in Table 1.

### Example 4

A PTFE aqueous dispersion and a modified PTFE fine powder were obtained as in Example 3, except that hydroquinone was added when 310 g of TFE had been consumed and supply of TFE was stopped when the amount of TFE polymerized reached 1250 g. The average aspect ratio was 1.35.

The physical properties of the resulting modified PTFE fine powder were measured. The results are shown in Table 1.

### Example 5

A PTFE aqueous dispersion and a modified PTFE fine powder were obtained as in Example 1, except that the amount of HFP fed was changed to 0.50 g. The average aspect ratio was 1.25.

The physical properties of the resulting modified PTFE fine powder were measured. The results are shown in Table 1.

### Example 6

A PTFE aqueous dispersion and a modified PTFE fine powder were obtained as in Example 5, except the following. When 180 g of TFE had been consumed from the start of the polymerization, stirring and feeding of TFE were stopped, followed by a slow release of gas inside the reactor until the pressure inside the reactor reached 0.02 MPaG. TFE was then fed until the pressure inside the reactor reached 0.78 MPaG and stirring was started again. The average aspect ratio was 1.34.

The physical properties of the resulting modified PTFE fine powder were measured. The results are shown in Table 1.

### Example 7

A 6-L polymerization tank equipped with a stainless-steel stirring blade and a temperature-controlling jacket was charged with 3580 g of deionized water, 180 g of paraffin wax, 5.4 g of the white solid A, and 0.027 g of oxalic acid. The inside of the polymerization tank was purged with nitrogen gas with warming to 70°C to remove oxygen. The temperature inside the tank was maintained at 70°C with stirring, and 1.88 g of HFP was added. Then, TFE gas was introduced thereinto to set the pressure to 2.7 MPaG. A potassium permanganate aqueous solution containing 3.4 mg of potassium permanganate dissolved in deionized water was added as an initiator with stirring of the contents, whereby a polymerization reaction was started. The potassium permanganate aqueous solution was continuously added to the tank at a constant rate. TFE was continuously fed so that the pressure inside the polymerization tank was constant at 2.7 MPaG. When the amount of TFE consumed reached 530 g, addition of the entire amount of the deionized water containing 3.4 mg of the potassium permanganate dissolved therein was completed. When the amount of TFE consumed reached 1440 g, stirring and feeding of TFE were stopped. The TFE in the polymerization tank was purged, and the polymerization reaction was terminated. The resulting aqueous dispersion was taken out and cooled, and the paraffin wax was separated, whereby a PTFE aqueous dispersion was obtained.

The PTFE aqueous dispersion obtained was diluted to a solid content concentration of 13% by mass. The PTFE was coagulated with stirring in the container, and water was filtered out, whereby a PTFE wet powder was obtained. The average aspect ratio was 1.28.

The obtained PTFE wet powder was dried in a hot-air circulating dryer at 160°C for 18 hours, whereby a modified PTFE fine powder was obtained.

The physical properties of the resulting modified PTFE fine powder were measured. The results are shown in Table 1.

### Example 8

A 6-L polymerization tank equipped with a stainless-steel stirring blade and a temperature-controlling jacket was charged with 3550 g of deionized water, 180 g of paraffin wax, and 5.4 g of the white solid A. The inside of the polymerization tank was purged with nitrogen gas with warming to 80°C to remove oxygen. The temperature inside the tank was maintained at 80°C with stirring, and 1.80 g of HFP was added. Then, TFE gas was introduced thereinto to set the pressure to 2.7 MPaG. Next, an aqueous solution prepared by dissolving 7.2 mg of ammonium persulfate in 20 g of water was injected with TFE, whereby a polymerization reaction was started. When 180 g of TFE had been consumed from the start of the polymerization, stirring and feeding of TFE were stopped, followed by a slow release of gas inside the reactor until the pressure inside the reactor reached 0.02 MPaG. TFE was then fed until the pressure inside the reactor reached 2.7 MPaG and stirring was started again. When 410 g of TFE had been consumed from the start of the polymerization, deionized water containing 11.0 mg of hydroquinone serving as a radical scavenger dissolved therein was continuously supplied at a constant rate. When the amount of TFE consumed reached 1000 g, addition of the entire amount of the deionized water containing 11.0 mg of hydroquinone dissolved therein was completed. When the amount of TFE consumed reached 1440 g, stirring and feeding of TFE were stopped. The TFE in the polymerization tank was purged, and the polymerization reaction was terminated. The resulting aqueous dispersion was taken out and cooled, and the paraffin wax was separated, whereby a PTFE aqueous dispersion was obtained. The average aspect ratio was 1.31.

The PTFE aqueous dispersion obtained was diluted to a solid content concentration of 13% by mass. The PTFE was coagulated with stirring in the container, and water was filtered out, whereby a PTFE wet powder was obtained.

The obtained PTFE wet powder was dried in a hot-air circulating dryer at 160°C for 18 hours, whereby a modified PTFE fine powder was obtained.

The physical properties of the resulting modified PTFE fine powder were measured. The results are shown in Table 1.

### Comparative Example 1

A PTFE fine powder was obtained as in Example 1, except that HPF was not added.

The physical proporties of the resulting PTFE fine powder were measured. Th eresults are shown in Table 1.

**[Table 1]**

| | Primary particle size | HFP content | SSG | TII | Extrusion pressure | Tensile strength at break | Strength ratio | Stress-relaxation time |
|---|---|---|---|---|---|---|---|---|
| | nm | % by mass | - | - | MPa | N | N/MPa | sec |
| Example 1 | 274 | 0.002 | 2.154 | 1 | 15.5 | 29.5 | 1.90 | 690 |
| Example 2 | 274 | 0.002 | 2.154 | 1 | 14.4 | 27.5 | 1.91 | 634 |
| Example 3 | 312 | 0.005 | 2.153 | 2 | 15.1 | 30.4 | 2.01 | 505 |
| Example 4 | 278 | 0.006 | 2.150 | 3 | 15.4 | 30.2 | 1.96 | 862 |
| Example 5 | 246 | 0.019 | 2.146 | 9 | 15.4 | 28.8 | 1.87 | 550 |
| Example 6 | 245 | 0.006 | 2.150 | 4 | 15.8 | 30.7 | 1.94 | 550 |
| Example 7 | 259 | 0.016 | 2.143 | 11 | 14.1 | 28.0 | 1.99 | 601 |
| Example 8 | 255 | 0.008 | 2.148 | 3 | 15.4 | 30.0 | 1.95 | 718 |
| Comparative Example 1 | 284 | - | 2.156 | 1 | 16.7 | 20.0 | 1.74 | 614 |

## Claims

1. A modified polytetrafluoroethylene comprising:
a tetrafluoroethylene unit; and
a hexafluoropropylene unit,
the hexafluoropropylene unit being contained in an amount of 1.0% by mass or less in all polymerized units,
the modified polytetrafluoroethylene having a tensile strength at break of 20.0 N or higher and a thermal instability index of lower than 40.

2. The modified polytetrafluoroethylene according to claim 1,
wherein the modified polytetrafluoroethylene has a strength ratio represented by "tensile strength at break (N)/extrusion pressure (MPa)" of 1.80 N/MPa or higher.

3. The modified polytetrafluoroethylene according to claim 1 or 2,
wherein the modified polytetrafluoroethylene has a stress-relaxation time of 500 seconds or longer.

4. The modified polytetrafluoroethylene according to any one of claims 1 to 3,
wherein the modified polytetrafluoroethylene has an extrusion pressure of lower than 17.0 MPa.

5. The modified polytetrafluoroethylene according to any one of claims 1 to 4,
wherein the modified polytetrafluoroethylene has an extrusion pressure of lower than 16.0 MPa.

6. A modified polytetrafluoroethylene comprising:
a tetrafluoroethylene unit; and
a hexafluoropropylene unit,
the hexafluoropropylene unit being contained in an amount of less than 0.1% by mass in all polymerized units.

7. The modified polytetrafluoroethylene according to any one of claims 1 to 6,
wherein the modified polytetrafluoroethylene is in the form of powder.

8. The modified polytetrafluoroethylene according to any one of claims 1 to 7,
wherein the modified polytetrafluoroethylene is in the form of fine powder.

9. An expanded article comprising the modified polytetrafluoroethylene according to any one of claims 1 to 8.
